# NEUE EUROPÄISCHE PATENTSCHRIFT

(11) **EP 3 181 399 B2**
(45) Veröffentlichungstag und Bekanntmachung des Hinweises auf die Entscheidung über den Einspruch: **09.04.2025**
(45) Hinweis auf die Patenterteilung: 12.05.2021
(21) Anmeldenummer: 16202030.9
(22) Anmeldetag: 02.12.2016
(51) Int. Cl.: B60P 3/077, B60P 3/36

(54) **REISEFAHRZEUG, INSBESONDERE REISEMOBIL**
TRAVELING VEHICLE, IN PARTICULAR MOBILE HOME
VEHICULE DE TOURISME, EN PARTICULIER CAMPING-CAR

(30) Priorität: 03.12.2015 EP 15197812
(43) Veröffentlichungstag der Anmeldung: 21.06.2017
(73) Patentinhaber: Scolotech GmbH, 88709 Meersburg (DE)
(72) Erfinder: Schuler, Karl-Heinz, 88255 Köpfingen über Baienfurt (DE)
(74) Vertreter: Daub, Thomas

(56) Entgegenhaltungen:
- EP-A1- 2 463 148
- EP-A2- 1 123 837
- WO-A1-91/01670
- DE-A1- 102011 105 561
- DE-A1- 102014 103 549
- DE-A1- 2 850 763
- DE-A1- 4 330 045
- DE-U1- 202006 005 639
- DE-U1- 202011 003 731
- DE-U1- 202016 008 772
- DE-U9- 202004 000 357
- FR-A1- 2 766 784
- FR-A1- 2 825 967
- FR-A1- 2 888 558
- GB-A- 178 689
- US-A- 2 717 084
- US-A- 3 942 646
- US-A- 4 465 196
- US-A1- 2003 099 532
- US-B1- 6 755 599
- US-B1- 8 696 272
- Werbeflyer "bimobil LB 365 VW Crafter" des Herstellers bimobil -von Liebe GmbH, Stand 08/2006
- Artikel MÜHLING. F„ '‘Alles im Kasten“ gute fahrt, Oktober 2009
- Faltblatt bknobil AX-575. Ausgabe Januar 2013
- Beschluss des LG Düsseldorf, Az. 4a O 6/20. vom 12.08.2021
- D26 until D30 technical drawings

## Beschreibung

### Stand der Technik

Die Erfindung betrifft ein Reisefahrzeug, insbesondere ein Reisemobil, nach dem Oberbegriff des Patentanspruchs 1 sowie ein Verfahren nach dem Oberbegriff des Patentanspruchs 11.

Aus der US 2003/099532 A1 ist bereits ein Reisefahrzeug, insbesondere ein Reisemobil, mit zumindest einem Stauraum, der zu einer Aufnahme wenigstens eines Zweirads vorgesehen ist, wobei der Stauraum innerhalb einer Garage angeordnet ist, mit zumindest einer Bodenwandung, die einen Boden des zumindest einen Stauraums ausbildet, mit einem Wohnbereich der an die Garage angrenzt, und mit zumindest einer Deckenwandung, die eine Decke des zumindest einen Stauraums ausbildet, wobei die zumindest eine Deckenwandung einen Boden für ein Bett ausbildet, bekannt. Auch aus der EP 1 123 837 A2 ist ein Reisefahrzeug mit einem Stauraum bekannt. Die FR 2 888 558 A1 zeigt ein Fahrzeug zum Transport von Zweirädern. Die EP 2 463 148 A1 zeigt ein Campingfahrzeug mit einem vom Wohnbereich durch einen Wandaufbau getrennten Stauraum, mit einem Stauraumdach, wobei das Stauraumdach durch Hubmittel in den Wohnbereich hinein angehoben werden kann, um den Stauraum zu vergrößern.

Die Aufgabe der Erfindung besteht insbesondere darin, ein gattungsgemäßes Reisefahrzeug bereitzustellen, mit dem wenigstens ein Zweirad besonders platzsparend in dem zumindest einen Stauraum transportiert werden kann.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Reisefahrzeug, insbesondere einem Reisemobil, mit zumindest einem Stauraum, der zu einer Aufnahme wenigstens eines Zweirads vorgesehen ist, wobei der Stauraum innerhalb einer Garage angeordnet ist, mit zumindest einer Bodenwandung, die einen Boden des zumindest einen Stauraums ausbildet, mit einem Wohnbereich der an die Garage angrenzt, und mit zumindest einer Deckenwandung, die eine Decke des zumindest einen Stauraums ausbildet, wobei die zumindest eine Deckenwandung einen Boden für ein Bett ausbildet.

Es wird vorgeschlagen, dass das Reisefahrzeug zumindest eine Reifenaufnahme umfasst, die zu einer Aufnahme zumindest eines Reifens des wenigstens einen Zweirads vorgesehen ist, wobei die zumindest eine Reifenaufnahme eine partielle Vertiefung in der zumindest einen Bodenwandung ausbildet. Dadurch kann der zumindest eine Stauraum besonders kompakt ausgebildet werden, ohne auf einen Transport des wenigstens einen Zweirads in einer aufrechten Position verzichten zu müssen. Eine Demontage eines oder beider Reifen des wenigstens einen Zweirads für einen Transport kann vorteilhaft vermieden werden. Ferner kann auf eine Demontage eines Lenkers des wenigstens einen Zweirads verzichtet werden. Der Stauraum kann vorteilhaft eine Stauraumhöhe aufweisen, die geringer ist als eine Gesamthöhe des wenigstens einen Zweirads. Der Stauraum kann weiterhin vorteilhaft in einem Parkzustand relativ zu einem Fahrbetrieb vergrößert werden. Alternativ können oberhalb des wenigstens einen Zweirads vorteilhaft weitere Gegenstände verstaut werden.

Das Reisefahrzeug kann unter anderem von einem Wohnwagen, einem Alkovenmobil, einem Kastenwagen, einem Van, einem teilintegrierten Reisemobil und/oder besonders bevorzugt von einem vollintegrierten Reisemobil gebildet sein. Der zumindest eine Stauraum ist innerhalb einer Garage, besonders bevorzugt innerhalb einer Heckgarage, angeordnet. Unter einem "Zweirad" soll in diesem Zusammenhang insbesondere ein Fahrrad, ein Elektrofahrrad und/oder ein Kraftrad, wie insbesondere ein Motorrad und/oder ein Motorroller, verstanden werden.

Die zumindest eine Reifenaufnahme ist vorzugsweise wannenförmig ausgebildet. Eine Oberkante der zumindest einen Reifenaufnahme schließt vorzugsweise bündig mit der zumindest einen Bodenwandung ab. Die zumindest eine Reifenaufnahme weist eine Reifenauflagefläche auf, die unterhalb einer Haupterstreckungsebene der Bodenwandung angeordnet ist. Bevorzugt verläuft die Reifenauflagefläche zumindest bereichsweise, bevorzugt zu einem Großteil, parallel zur Haupterstreckungsebene. Weiterhin vorteilhaft verläuft ein Teil der Reifenauflagefläche schräg zur Haupterstreckungsebene. Alternativ ist es denkbar, dass die gesamte Reifenauflage zumindest im Wesentlichen parallel zur Haupterstreckungsebene verläuft. Unter "zumindest im Wesentlichen" soll in diesem Zusammenhang insbesondere eine Abweichung von weniger als 10°, bevorzugt von weniger als 5°, besonders bevorzugt von weniger als 1° verstanden werden.

Unter "unterhalb" soll in diesem Zusammenhang insbesondere in eine Vertikalrichtung versetzt verstanden werden, die senkrecht zur Bodenwandung verläuft und die zur Bodenwandung weist. Insbesondere entspricht die Vertikalrichtung in einem Fahrbetrieb in der Ebene zumindest im Wesentlichen einer Richtung der Schwerkraft. Die Reifenaufnahme ist vorteilhaft schlitzförmig ausgebildet. Eine Länge der zumindest einen Reifenaufnahme ist dabei bevorzugt wesentlich größer als eine Breite der zumindest einen Reifenaufnahme. Bevorzugt ist die Länge der zumindest einen Reifenaufnahme zumindest doppelt, bevorzugt zumindest dreimal, besonders bevorzugt zumindest fünfmal so groß wie eine Breite der zumindest einen Reifenaufnahme. Die partielle Vertiefung ist zu einer Aufnahme des zumindest einen Reifens des wenigstens einen Zweirads vorgesehen. Bevorzugt reicht die partielle Vertiefung in Vertikalrichtung betrachtet bis in einen Längsträgerbereich des Reisefahrzeugs. Unter "partiell" soll in diesem Zusammenhang insbesondere mit einem Anteil einer Gesamtfläche verstanden werden. Bevorzugt beträgt der Anteil weniger als 10 %. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren nicht erfindungsgemäßen Ausgestaltung wird vorgeschlagen, dass die zumindest eine Reifenaufnahme eine Hauptlängserstreckung aufweist, die quer zu einer Fahrzeuglängsrichtung ausgerichtet ist. Dadurch kann ein Reifen auf besonders komfortable Weise in die zumindest eine Reifenaufnahme eingeschoben und/oder aus der Reifenaufnahme entnommen werden. Eine Demontage des Reifens vom zumindest einen Zweirad ist dabei vorteilhaft nicht erforderlich. Eine Längserstreckung des zumindest einen Stauraums kann vorteilhaft gering gehalten werden. Unter einer "Fahrzeuglängsrichtung" soll dabei insbesondere eine Richtung verstanden werden, welche parallel zu einer längsten Kante eines kleinsten geometrischen Quaders verläuft, welcher das Reisefahrzeug gerade noch vollständig umschließt. Unter "quer" soll in diesem Zusammenhang insbesondere in einem Winkel von zumindest im Wesentlichen 90° verstanden werden. Erfindungsgemäß wird vorgeschlagen, dass die Reifenaufnahme eine Hauptlängsrichtung aufweist, die parallel zur Fahrzeuglängsrichtung ausgerichtet ist. Dadurch kann insbesondere bei einem Kastenwagen und/oder bei einem Van eine besonders platzsparende Anordnung des zumindest einen Zweirads erfolgen.

Des Weiteren wird vorgeschlagen, dass die zumindest eine Reifenaufnahme zumindest teilweise in einem Bereich einer Fahrzeugseitenwand angeordnet ist. Dadurch kann eine Breite des zumindest einen Stauraums besonders gut ausgenutzt werden. Es können vorteilhaft besonders große Zweiräder im Stauraum verstaut werden.

Ferner wird vorgeschlagen, dass die partielle Vertiefung wenigstens 5 cm unter eine Hauptbodenfläche der zumindest einen Bodenwandung reicht. Dadurch kann eine Standsicherheit eines verstauten Zweirads vorteilhaft erhöht werden. Weiterhin kann eine Verstauhöhe geringer ausfallen als eine Gesamthöhe des Zweirads. Bevorzugt reicht die partielle Vertiefung wenigstens 10 cm, besonders bevorzugt wenigstens 15 cm, unter die Bodenfläche der zumindest einen Bodenwandung. Unter einer "Hauptbodenfläche" soll erfindungsgemäß eine größtmögliche ebene Fläche der Bodenwandung verstanden werden.

Zudem wird vorgeschlagen, dass eine Oberkante der zumindest einen Reifenaufnahme zumindest im Wesentlichen bündig mit der zumindest einen Bodenwandung abschließt. Dadurch kann ein Reifen des Zweirads besonders einfach und kraftsparend in die Reifenaufnahme bewegt werden. Unter "zumindest im Wesentlichen bündig" soll in diesem Zusammenhang insbesondere mit einer maximalen Abweichung von 1 cm, bevorzugt mit einer maximalen Abweichung von 0,5 cm und besonders bevorzugt ohne eine Abweichung verstanden werden. Weiterhin wird vorgeschlagen, dass eine Breite der zumindest einen Reifenaufnahme zumindest im Wesentlichen einer Breite des aufzunehmenden Reifens entspricht. Dadurch kann ein besonders sicherer Seitenhalt eines in der Reifenaufnahme eingebrachten Reifens erzielt werden. Unter "im Wesentlichen" soll hier insbesondere mit einer maximalen Abweichung von 5 %, bevorzugt von 2 % und ganz besonders bevorzugt von 0,5 % verstanden werden.

Es ist denkbar, dass das Reisefahrzeug eine Bodenhöheneinstelleinheit umfasst, die dazu vorgesehen ist, die zumindest eine Bodenwandung in einer Höhe relativ zu einer Reisefahrzeugkarosserie einzustellen, und eine Platte, die an die Bodenwandung angrenzt, mit der Bodenwandung einen Winkel von 45° einschließt und fest mit der Bodenwandung verbunden ist, und Seitenwandungen, die fest an der Bodenwandung angeordnet sind und mit der Bodenwandung einen rechten Winkel einschließen, umfasst, wobei die Bodenwandung zusammen mit der Platte und den Seitenwandungen eine absenkbare Staubox ausbildet, wobei die Platte an eine feststehende Bodenplatte angrenzt, die einen Teil des Stauraums begrenzt, wobei die feststehende Bodenplatte fest relativ zur Reisefahrzeugkarosserie angeordnet ist.

Des Weiteren wird vorgeschlagen, dass die zumindest eine Deckenwandung dazu vorgesehen ist, aus einer Ausgangslage zumindest bereichsweise relativ zur zumindest einen Bodenwandung bewegt zu werden. Dadurch können auf einfache Weise Zweiräder in die Reifenaufnahme eingebracht werden, die eine größere Gesamthöhe aufweisen als eine Stauraumhöhe. Vorzugsweise verläuft die zumindest eine Deckenwandung in der Ausgangslage zumindest im Wesentlichen parallel zur zumindest einen Bodenwandung.

Ferner wird vorgeschlagen, dass das Reisefahrzeug eine Scharniereinheit umfasst, die dazu vorgesehen ist, die zumindest eine Deckenwandung relativ zur zumindest einen Bodenwandung schwenkbar zu lagern. Dadurch kann ein besonders einfaches und kraftsparendes Anheben der zumindest einen Deckenwandung erreicht werden. Vorteilhaft umfasst die Scharniereinheit zumindest zwei Scharnierelemente. Die zumindest zwei Scharnierelemente sind insbesondere entlang einer Schwenkachse der Scharniereinheit versetzt zueinander angeordnet. Zusätzlich oder alternativ wird vorgeschlagen, dass das Reisefahrzeug eine Schienenführung und/oder eine Kulissenführung umfasst, die dazu vorgesehen ist, die zumindest eine Deckenwandung relativ zur zumindest einen Bodenwandung linear und/oder schwenkbar zu lagern. Besonders vorteilhaft kann das Reisefahrzeug eine Schienenführung umfassen, in welcher die zumindest eine Deckenwandung senkrecht zur zumindest einen Bodenwandung verschiebbar gelagert ist. Zusätzlich wird vorgeschlagen, dass die zumindest eine Deckenwandung motorisch relativ zur zumindest einen Bodenwandung bewegbar ist.

Weiterhin wird vorgeschlagen, dass die Scharniereinheit dazu vorgesehen ist, die zumindest eine Deckenwandung um eine Schwenkachse zu lagern, die sich zumindest im Wesentlichen parallel zur Fahrzeuglängsrichtung erstreckt. Dadurch kann die Deckenwandung auf konstruktiv besonders einfache und zuverlässige Weise zumindest bereichsweise angehoben und abgesenkt werden. Der Stauraum kann vorteilhaft auf einfache Weise vergrößert werden, insbesondere zum Einladen und/oder zum Transport des Zweirads.

Ferner wird vorgeschlagen, dass das Reisefahrzeug eine weitere Deckenwandung umfasst, die eine Decke des zumindest einen Stauraums und einen Boden für ein Bett ausbildet und die dazu vorgesehen ist, aus einer Ausgangslage zumindest bereichsweise relativ zur zumindest einen Bodenwandung und zur Deckenwandung bewegt zu werden. Dadurch können die einzelnen beweglichen Deckenwandungen der Decke vorteilhaft leichter und einfacher zu bewegen ausgebildet werden. Weiterhin vorteilhaft kann die Decke auf einfache Weise längsmittig geteilt werden.

Es ist denkbar, dass die Bodenhöheneinstelleinheit dazu vorgesehen ist, die zumindest eine Bodenwandung zumindest im Wesentlichen senkrecht zu einer Bodenebene der zumindest einen Bodenwandung verschiebbar zu lagern. Dadurch kann ein Volumen, insbesondere eine Höhe, des Stauraums vorteilhaft nach Bedarf verändert werden. Ein Zweirad kann somit insbesondere in einem Parkzustand ohne eine Anhebung der Decke in den Stauraum bewegt werden. Zusätzlich und/oder alternativ ist denkbar, dass die Bodenhöheneinstelleinheit dazu vorgesehen ist, die zumindest eine Bodenwandung schwenkbar zu lagern.

Weiterhin ist denkbar, dass die Bodenhöheneinstelleinheit zumindest einen Antriebsmotor umfasst, der zu einer motorischen Verstellung der zumindest einen Bodenwandung vorgesehen ist. Dadurch kann eine Anpassung einer Höhe des Stauraums auf eine besonders komfortable Weise vorgenommen werden.

Weiterhin wird ein Verfahren zur Verstauung wenigstens eines Zweirads in einem Stauraum eines Reisefahrzeugs vorgeschlagen, wobei zumindest ein Reifen des wenigstens einen Zweirads in zumindest eine Reifenaufnahme bewegt wird, die eine partielle Vertiefung zumindest einer Bodenwandung ausbildet. Dadurch kann der zumindest eine Stauraum besonders kompakt ausgebildet werden, ohne auf einen Transport des wenigstens einen Zweirads in einer aufrechten Position verzichten zu müssen. Eine Demontage eines oder beider Reifen des wenigstens einen Zweirads für einen Transport kann vorteilhaft vermieden werden. Ferner kann auf eine Demontage eines Lenkers des wenigstens einen Zweirads verzichtet werden.

Zudem wird vorgeschlagen, dass zu einer Verstauung des wenigstens einen Zweirads zumindest eine Deckenwandung relativ zur zumindest einen Bodenwandung zumindest bereichsweise wegbewegt, insbesondere weggeschwenkt wird. Dadurch kann ein besonders einfaches Verstauen des wenigstens einen Zweirads erzielt werden. Zusätzlich wird vorgeschlagen, dass zu einer Entnahme des wenigstens einen Zweirads die zumindest eine Deckenwandung relativ zur zumindest einen Bodenwandung zumindest bereichsweise wegbewegt, insbesondere weggeschwenkt wird.

### Zeichnungen

Weitere Vorteile ergeben sich aus der folgenden Zeichnungsbeschreibung. In den Zeichnungen sind zwei Ausführungsbeispiele dargestellt, die nicht von der Erfindung umfasst sind.

Es zeigen:
- Fig. 1: einen schematischen Grundriss eines Reisefahrzeugs mit einem Stauraum,
- Fig. 2: einen schematischen Schnitt durch den Stauraum des Reisefahrzeugs während einer Verstauung und/oder einer Entnahme eines Zweirads,
- Fig. 3: einen schematischen Schnitt durch den Stauraum des Reisefahrzeugs in einem verstauten Zustand des Zweirads,
- Fig. 4: einen schematischen Schnitt durch den Stauraum eines alternativ ausgebildeten Reisefahrzeugs in einem Fahrzustand,
- Fig. 5: einen schematischen Schnitt durch den Stauraum des alternativ ausgebildeten Reisefahrzeugs mit einer vollständig abgesenkten Bodenwandung,
- Fig. 6: einen schematischen Schnitt durch den Stauraum des alternativ ausgebildeten Reisefahrzeugs mit einer hochgeklappten Deckenwandung und
- Fig. 7: einen schematischen Schnitt durch den Stauraum des alternativ ausgebildeten Reisefahrzeugs mit einer heruntergeklappten Deckenwandung.

### Beschreibung der Ausführungsbeispiele

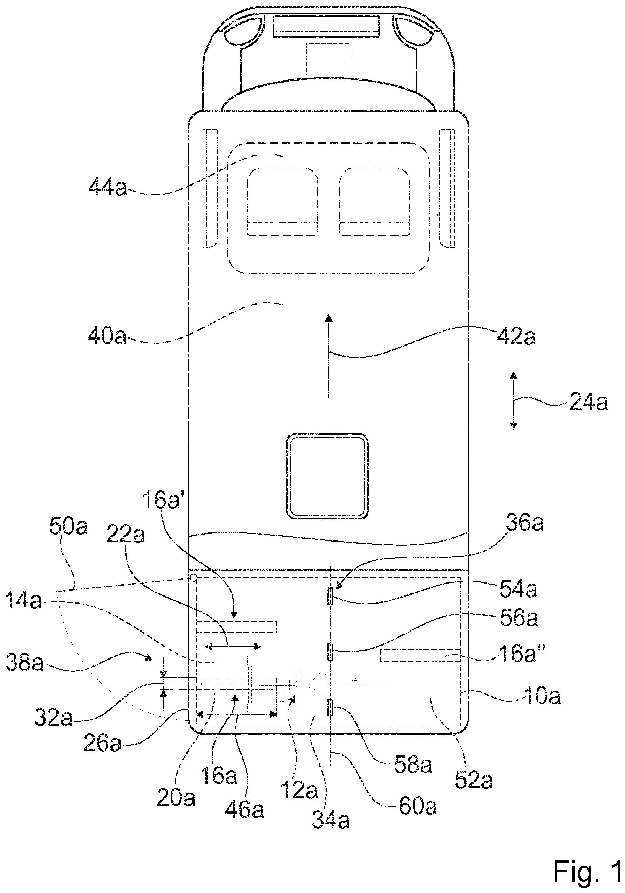

In der Figur 1 ist schematisch ein Grundriss eines Reisefahrzeugs in einem ersten Ausführungsbeispiel dargestellt. Das Reisefahrzeug ist von einem Reisemobil gebildet. Das Reisemobil ist vollintegriert ausgebildet. Das Reisefahrzeug weist einen Stauraum 10a auf. Es ist in diesem Zusammenhang auch denkbar, dass das Reisefahrzeug mehrere Stauräume aufweist. Der Stauraum 10a ist innerhalb einer Garage 38a angeordnet. Genauer gesagt, ist der Stauraum 10a innerhalb einer Heckgarage angeordnet. Anders ausgedrückt, schließt die Garage 38a eine Heckpartie des Reisefahrzeugs ab. An die Garage 38a grenzt ein Wohnbereich 40a des Reisefahrzeugs an. Der Wohnbereich 40a ist in eine Vorwärtsfahrrichtung 42a betrachtet hinter der Garage 38a angeordnet. An den Wohnbereich 40a schließt sich in Vorwärtsfahrrichtung 42a betrachtet eine Fahrerkabine 44a an.

Der Stauraum 10a ist zu einer Aufnahme eines Zweirads 12a vorgesehen. Das Zweirad 12a ist von einem Fahrrad gebildet. Es ist in diesem Zusammenhang jedoch auch denkbar, dass das Zweirad 12a von einem Elektrofahrrad, einem Motorrad oder einem Motorroller gebildet ist. Der Stauraum 10a weist einen rechteckigen Grundriss auf.

Das Reisefahrzeug umfasst eine Reifenaufnahme 16a. Ferner umfasst das Reisefahrzeug zwei weitere Reifenaufnahmen 16a', 16a". Die Reifenaufnahmen 16a, 16a', 16a" sind in eine Fahrzeuglängsrichtung 24a betrachtet versetzt zueinander angeordnet. Die Reifenaufnahmen 16a, 16"a sind quer zur Fahrzeuglängsrichtung 24a betrachtet versetzt zueinander angeordnet. Ansonsten entsprechen sich die Reifenaufnahmen 16a, 16a', 16a" in Form und Funktion. Daher wird im Folgenden auf eine Beschreibung der zwei weiteren Reifenaufnahmen 16a', 16a" verzichtet.

Das Reisefahrzeug weist eine Bodenwandung 14a auf. Die Bodenwandung 14a bildet einen Boden des Stauraums 10a aus. Hierbei ist es insbesondere denkbar, dass das Reisefahrzeug mehrere Bodenwandungen 14a aufweist, die zusammen den Boden des Stauraums 10a ausbilden. Die Reifenaufnahme 16a ist zu einer Aufnahme eines Reifens 18a des Zweirads 12a vorgesehen. Die Reifenaufnahme 16a bildet eine partielle Vertiefung 20a in der Bodenwandung 14a aus. Die Reifenaufnahme 16a ist schlitzförmig ausgebildet. Eine Länge 46a der Reifenaufnahme 16a ist wesentlich größer als eine Breite 32a der Reifenaufnahme 16a. Die Länge 46a der Reifenaufnahme 16a ist mehr als achtmal so groß wie die Breite 32a der Reifenaufnahme 16a.

Die Breite 32a der Reifenaufnahme 16a entspricht im Wesentlichen einer Breite des aufzunehmenden Reifens 18a. Die Reifenaufnahme 16a weist eine Hauptlängserstreckung 22a auf. Die Hauptlängserstreckung 22a ist quer zur Fahrzeuglängsrichtung 24a ausgerichtet. Die Reifenaufnahme 16a ist in einem Bereich einer Fahrzeugseitenwand 26a angeordnet. Die Fahrzeugseitenwand 26a bildet im Bereich der Garage 38a eine Seitentür 50a aus. Eine Höhe der Seitentür 50a entspricht im Wesentlichen einer Höhe des Stauraums 10a.

Das Reisefahrzeug weist eine Deckenwandung 34a auf. Die Deckenwandung 34a bildet einen Teil einer Decke des Stauraums 10a aus. Die Deckenwandung 34a ist relativ zur Bodenwandung 14a beweglich ausgebildet. Das Reisefahrzeug weist eine weitere Deckenwandung 52a auf. Die Deckenwandung 34a und die weitere Deckenwandung 52a sind, quer zur Fahrzeuglängsrichtung 24a betrachtet, hintereinander angeordnet. Die weitere Deckenwandung 52a ist relativ zur Bodenwandung 14a fest angeordnet. Das Reisefahrzeug umfasst eine Scharniereinheit 36a. Die Scharniereinheit 36a ist dazu vorgesehen, die Deckenwandung 34a relativ zur Bodenwandung 14a schwenkbar zu lagern. Die Scharniereinheit 36a umfasst mehrere Scharnierelemente 54a, 56a, 58a. Die Scharnierelemente 54a, 56a, 58a sind entlang einer Schwenkachse 60a der Scharniereinheit 36a versetzt zueinander angeordnet. Die Schwenkachse 60a verläuft parallel zur Fahrzeuglängsrichtung 24a.

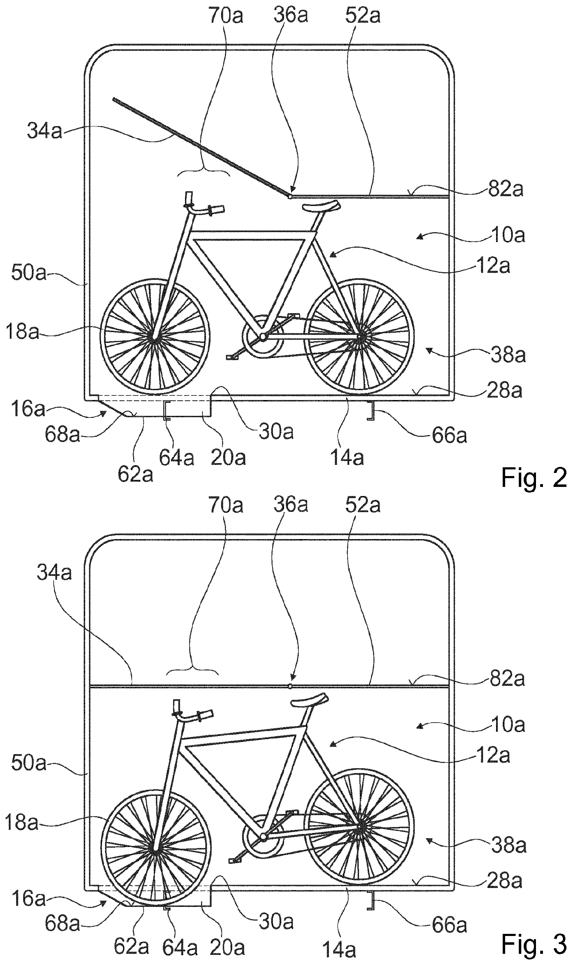

Wie in der Figur 2 gezeigt, reicht die partielle Vertiefung 20a etwa 10 cm unter eine Hauptbodenfläche 28a der Bodenwandung 14a. Eine Oberkante 30a der Reifenaufnahme 16a schließt bündig mit der Bodenwandung 14a ab. Die Reifenaufnahme 16a ist wannenförmig ausgebildet. Die Bodenwandung 14a weist eine geringere Dicke auf als eine Tiefe der partiellen Vertiefung 20a. Die partielle Vertiefung 20a durchdringt die Bodenwandung 14a vollständig. Die Reifenaufnahme 16a weist eine Wanne 62a auf. Die Wanne 62a ist unterhalb der Bodenwandung 14a angeordnet. Die Wanne 62a ist mit der Bodenwandung 14a verschraubt. Es ist hierbei insbesondere auch denkbar, dass die Wanne 62a mit der Bodenwandung 14a verklebt, vernietet und/oder verrastet ist. Die Wanne 62a ist aus einem Blech hergestellt. Es ist in diesem Zusammenhang insbesondere auch denkbar, dass die Wanne 62a aus einem Kunststoff hergestellt ist.

Unterhalb der Bodenwandung 14a sind zwei Fahrzeuglängsträger 64a, 66a angeordnet. Die Bodenwandung 14a liegt auf den Fahrzeuglängsträgern 64a, 66a auf. Die Fahrzeuglängsträger 64a, 66a ragen, in Fahrzeuglängsrichtung 24a betrachtet, bis vor die Reifenaufnahme 16a. Die Wanne 62a erstreckt sich in Richtung eines Untergrunds weniger weit als die Fahrzeuglängsträger 64a, 66a. Eine Bodenfreiheit des Reisefahrzeugs wird durch die Wanne 62a nicht verringert. Die Reifenaufnahme 16a weist eine Reifenauflagefläche 68a auf. Die Reifenauflagefläche 68a ist unterhalb der Hauptbodenfläche 28a der Bodenwandung 14a angeordnet. Die Reifenauflagefläche 68a verläuft bereichsweise parallel zur Hauptbodenfläche 28a. Ein Teil der Reifenauflagefläche 68a ist schräg zur Hauptbodenfläche 28a verlaufend angeordnet. Der Teil der Reifenauflagefläche 68a ist um etwa 25° zur Hauptbodenfläche 28a angewinkelt.

Das Zweirad 12a weist in einem Lenkerbereich 70a eine größere Höhe auf als eine Höhe des Stauraums 10a, die sich von der Hauptbodenfläche 28a bis zur Deckenwandung 52a erstreckt. Ein Heckteil des Zweirads 12a weist eine geringere Höhe auf und lässt sich durch die Seitentür 50a in den Stauraum 10a einbringen. Die Deckenwandung 34a ist aus einer Ausgangslage hochgeschwenkt. Die Deckenwandung 34a ist somit dazu vorgesehen, aus der Ausgangslage heraus relativ zur Bodenwandung 14a bewegt zu werden. Die Deckenwandung 34a erstreckt sich in der Ausgangslage parallel zur Bodenwandung 14a.

Eine Höhe zwischen der Deckenwandung 34a und der Bodenwandung 14a ist dadurch bereichsweise vergrößert. Das Zweirad 12a ist nun vollständig in den Stauraum 10a bewegbar. Der Lenkerbereich 70a passt aufgrund der vergrößerten Höhe in den Stauraum 10a. Um die Deckenwandung 34a wieder in die Ausgangslage bewegen zu können, wird der Reifen 18a in die Reifenaufnahme 16a eingebracht (Figur 3). Der Lenkerbereich 70a senkt sich dabei ab. Die Deckenwandung 34a befindet sich wieder in der Ausgangslage. Die Deckenwandungen 34a, 52a bilden einen Boden 82a für ein Bett 74a aus. Das Bett 74a kann dabei quer oder längs zur Fahrzeuglängsrichtung 24a verlaufen.

Somit wird bei einer Verstauung des Zweirads 12a in den Stauraum 10a der Reifen 18a in die Reifenaufnahme 16a bewegt, welche die partielle Vertiefung 20a ausbildet. Die Deckenwandung 34a wird zur Verstauung des Zweirads 12a relativ zur Bodenwandung 14a wegbewegt. Genauer gesagt, wird die Deckenwandung 34a zur Verstauung relativ zur Bodenwandung 14a weggeschwenkt. Zu einer Entnahme des Zweirads 12a wird die Deckenwandung 34a relativ zur Bodenwandung 14a weggeschwenkt.

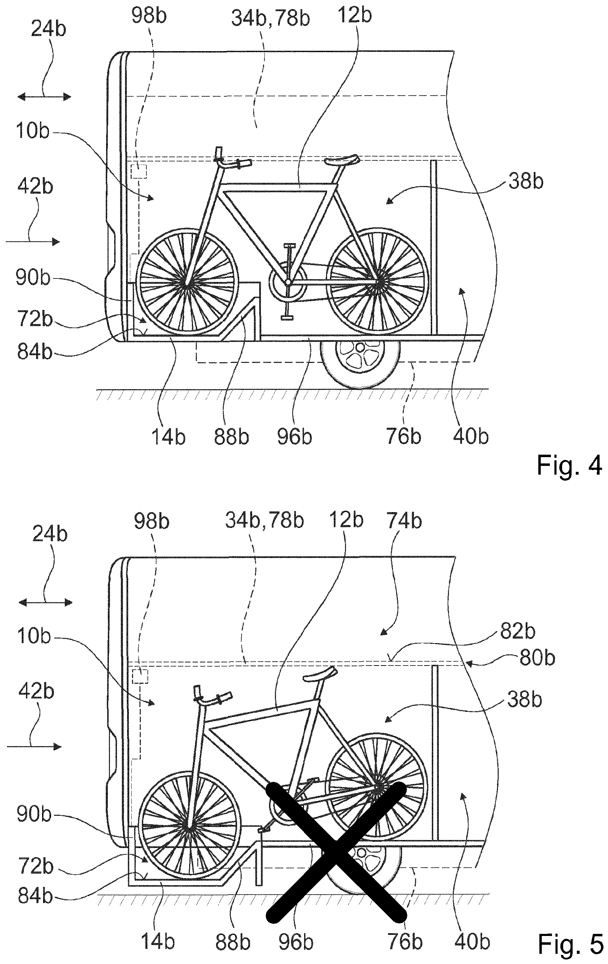

In den Figuren 4 bis 7 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figuren 4 bis 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

In den Figuren 4 und 5 ist schematisch ein Schnitt eines Reisefahrzeugs in einem zweiten Ausführungsbeispiel dargestellt. Das Reisefahrzeug ist von einem Reisemobil gebildet. Das Reisemobil ist als Kastenwagen ausgebildet. Das Reisefahrzeug weist einen Stauraum 10b auf. Es ist in diesem Zusammenhang auch denkbar, dass das Reisefahrzeug mehrere Stauräume aufweist. Der Stauraum 10b ist innerhalb einer Garage 38b angeordnet. Genauer gesagt, ist der Stauraum 10b innerhalb einer Heckgarage angeordnet. Anders ausgedrückt, schließt die Garage 38b eine Heckpartie des Reisefahrzeugs ab. Das Reisefahrzeug weist einen Wohnbereich 40b auf. Der Wohnbereich 40b grenzt an die Garage 38b an. Der Wohnbereich 40b grenzt an den Stauraum 10b an. Der Wohnbereich 40b ist in eine Vorwärtsfahrrichtung 42b betrachtet hinter der Garage 38b angeordnet. An den Wohnbereich 40b schließt sich in Vorwärtsfahrrichtung 42b betrachtet eine hier nicht dargestellte Fahrerkabine an.

Der Stauraum 10b ist zu einer Aufnahme eines Zweirads 12b vorgesehen. Das Zweirad 12b ist von einem Fahrrad gebildet. Es ist in diesem Zusammenhang jedoch auch denkbar, dass das Zweirad 12b von einem Elektrofahrrad, einem Motorrad oder einem Motorroller gebildet ist. Der Stauraum 10b weist einen rechteckigen Grundriss auf. Das Reisefahrzeug umfasst eine Bodenwandung 14b. Die Bodenwandung 14b bildet einen Boden des Stauraums 10b aus.

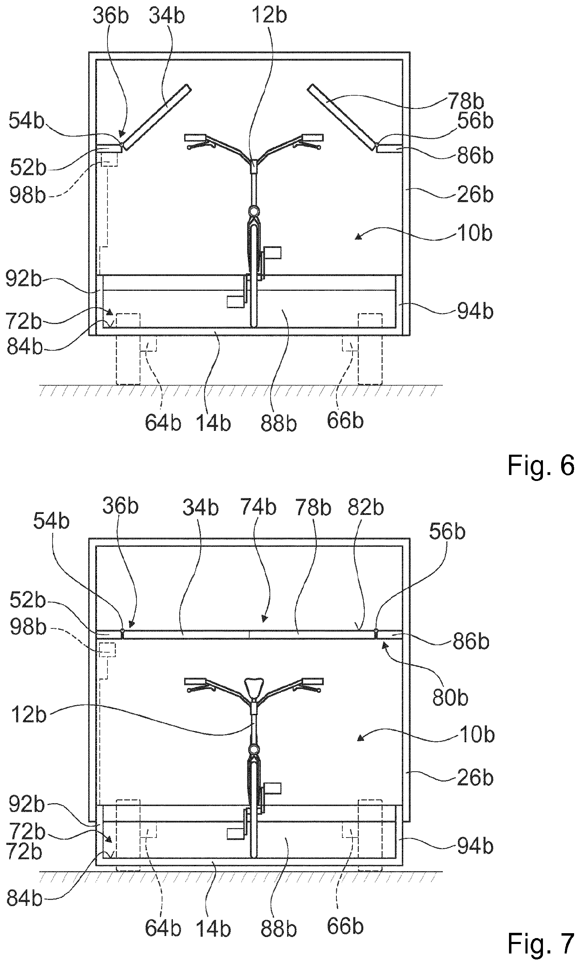

Wie in den Figuren 6 und 7 näher gezeigt, umfasst das Reisefahrzeug eine Deckenwandung 34b. Die Deckenwandung 34b ist dazu vorgesehen, aus einer Ausgangslage relativ zur Bodenwandung 14b bewegt zu werden. Die Deckenwandung 34b bildet eine Decke 80b des Stauraums 10b und einen Boden 82b für ein Bett 74b aus. Das Reisefahrzeug umfasst eine weitere Deckenwandung 78b. Die weitere Deckenwandung 78b ist dazu vorgesehen, aus einer Ausgangslage relativ zur Bodenwandung 14b bewegt zu werden. Die weitere Deckenwandung 78b bildet die Decke 80b des Stauraums 10b aus. Die weitere Deckenwandung 78b bildet den Boden 82b für das Bett 74b aus. Die Deckenwandungen 34b, 78b weisen eine gleiche Breite auf. In einer Schlafkonfiguration, in welcher das Bett 74b nutzbar ist, erstrecken sich die Deckenwandungen 34b, 78b parallel zur Bodenwandung 14b und bilden gemeinsam eine Liegefläche aus. Hierbei liegen die Deckenwandungen 34b, 78b in einem Kantenbereich aneinander an. Genauer gesagt, grenzen die Deckenwandungen 34b, 78b in der Schlafkonfiguration in einer Längsmittelebene des Reisefahrzeugs aneinander an.

Das Reisefahrzeug umfasst zusätzlich zwei feststehende Deckenwandungen 52b, 86b. Die feststehenden Deckenwandungen 52b, 86b sind fest mit einer Fahrzeugseitenwand 26b des Reisefahrzeugs verbunden. Die feststehenden Deckenwandungen 52b, 86b erstrecken sich in einem rechten Winkel zur Fahrzeugseitenwand 26b. Die Deckenwandungen 34b, 52b, 78b, 86b bilden, insbesondere in zumindest der Schlafkonfiguration, die Decke 80b des Stauraums 10b aus. Die feststehenden Deckenwandungen 52b, 86b bilden den Boden 82b für das Bett 74b aus.

Die Deckenwandungen 34b, 78b sind schwenkbar gelagert. Das Reisefahrzeug umfasst hierbei eine Scharniereinheit 36b. Die Scharniereinheit 36b ist dazu vorgesehen, die Deckenwandungen 34b, 78b relativ zur Bodenwandung 14b schwenkbar zu lagern. Die Scharniereinheit 36b ist dazu vorgesehen, die Deckenwandung 34b um eine Schwenkachse zu lagern, die sich parallel zur Fahrzeuglängsrichtung 24b erstreckt. Die Scharniereinheit 36b ist ferner dazu vorgesehen, die weitere Deckenwandung 78b um eine Schwenkachse zu lagern, die sich parallel zur Fahrzeuglängsrichtung 24b erstreckt. Die Scharniereinheit 36b umfasst ein Scharnierelement 54b. Das Scharnierelement 54b verbindet die Deckenwandung 34b schwenkbar mit der feststehenden Deckenwandung 52b. Die Scharniereinheit 36b umfasst ein weiteres Scharnierelement 56b. Das weitere Scharnierelement 56b verbindet die weitere Deckenwandung 78b schwenkbar mit der feststehenden Deckenwandung 86b.

Das Reisefahrzeug umfasst eine Bodenhöheneinstelleinheit 72b. Die Bodenhöheneinstelleinheit 72b ist dazu vorgesehen, die Bodenwandung 14b in einer Höhe relativ zu einer Reisefahrzeugkarosserie 76b einzustellen. Die Bodenhöheneinstelleinheit 72b ist somit dazu vorgesehen, einen Abstand zwischen der Bodenwandung 14b und den Deckenwandungen 34b, 52b, 78b, 86b zu verändern. Dabei bleibt eine Stellung der Deckenwandungen 34b, 52b, 78b, 86b unverändert. Ferner ist die Bodenhöheneinstelleinheit 72b dazu vorgesehen, einen die Bodenwandung 14b relativ zu Fahrzeuglängsträgern 64b, 66b des Reisefahrzeugs zu bewegen.

Es ist in diesem Zusammenhang jedoch auch denkbar, dass das Reisefahrzeug analog zum ersten Ausführungsbeispiel zumindest eine Reifenaufnahme umfasst, die zu einer

Aufnahme zumindest eines Reifens 18b des Zweirads 12b vorgesehen ist, wobei die zumindest eine Reifenaufnahme eine partielle Vertiefung in der Bodenwandung 14b ausbildet.

Die Bodenhöheneinstelleinheit 72b ist dazu vorgesehen, die Bodenwandung 14b senkrecht zu einer Bodenebene 84b der Bodenwandung 14b verschiebbar zu lagern. Die Bodenhöheneinstelleinheit 72b weist hierzu eine nicht näher gezeigte Schienenführung auf. Alternativ und/oder zusätzlich ist die Bodenhöheneinstelleinheit 72b dazu vorgesehen, die Bodenwandung 14b schwenkbar zu lagern. Eine Schwenkachse verläuft hierbei vorteilhaft quer oder parallel zu einer Vorwärtsfahrrichtung 42 und parallel zur Bodenebene 84b. Es ist in diesem Zusammenhang jedoch auch denkbar, dass die Bodenhöheneinstelleinheit 72b dazu vorgesehen ist, die Bodenwandung 14b entlang einer Kulissenführung verschiebbar zu lagern und/oder in einer kombinierten Schwenk-/Verschiebebewegung zu lagern. An die Bodenwandung 14b grenzt eine Platte 88b des Reisefahrzeugs an, die zur Bodenwandung 14b einen Winkel von 45° einschließt. Die Platte 88b ist fest mit der Bodenwandung 14b verbunden. Ferner sind an der Bodenwandung 14b Seitenwandungen 90b, 92b, 94b des Reisefahrzeugs fest angeordnet. Die Seitenwandungen 90b, 92b, 94b schließen mit der Bodenwandung 14b einen rechten Winkel ein. Die Bodenwandung 14b bildet zusammen mit der Platte 88b und den Seitenwandungen 90b, 92b, 94b eine Staubox, insbesondere eine absenkbare Staubox, aus. Die Platte 88b grenzt an eine feststehende Bodenplatte 96b an, die einen Teil des Stauraums 10b begrenzt. Die feststehende Bodenplatte 96b ist fest relativ zur Reisefahrzeugkarosserie 76b angeordnet.

Die Bodenhöheneinstelleinheit 72b umfasst einen Antriebsmotor 98b. Der Antriebsmotor 98b ist zu einer motorischen Verstellung der Bodenwandung 14b vorgesehen. Der Antriebsmotor 98b bildet einen Elektromotor aus. Ein Absenken und Heben der Bodenwandung 14b erfolgt somit durch den Antriebsmotor 98b. Eine Bedienung des Antriebsmotors 98b kann beispielsweise über ein Schaltelement erfolgen, welches im Wohnbereich 40b oder in der Fahrerkabine angeordnet ist. Es ist in diesem Zusammenhang jedoch auch denkbar, dass ein Starten eines Fahrzeugmotors bei einer abgesenkten Bodenwandung 14b über Sicherungsmittel verhindert wird. Es ist in diesem Zusammenhang auch denkbar, dass ein Absenken oder Heben der Bodenwandung 14b manuell über Gurte, einen Seilzug und/oder Gasdruckfedern erfolgt.

Die Bodenwandung 14b kann stufenlos und parallel zur Bodenplatte 96b abgesenkt werden. Ein Absenken kann beispielsweise bis zu einem Untergrund erfolgen oder bis weitere Kollisionspunkte, z.B. mit Pedalen des Zweirads 12b entstehen. Ebenso ist es denkbar, dass die Bodenwandung 14b nicht parallel zur Bodenplatte 96b absenkbar ausgebildet ist, sondern über eine Drehachse schwenkbar gelagert ist. Es ist in diesem Zusammenhang denkbar, dass die Bodenwandung 14b in Zwischenstufen absenkbar ist oder ausschließlich ganz nach unten absenkbar ist.

In einer Fahrkonfiguration ist die Bodenwandung 14b angehoben (Figur 4). Dadurch entsteht eine größtmögliche Bodenfreiheit für das Reisefahrzeug. Die Deckenwandungen 34b, 78b sind hochgeklappt. Dadurch kann das Zweirad 12b innerhalb des nach oben geöffneten Stauraums 10b transportiert werden. Zum Herstellen der Schlafkonfiguration wird bei einem Stillstand des Reisefahrzeugs die Bodenwandung 14b abgesenkt. Im gezeigten Ausführungsbeispiel befindet sich ein Vorderreifen des Zweirads 12b auf der Bodenwandung 14b. Das Zweirad 12b wird somit beim Absenken der Bodenwandung 14b um ein Hinterrad des Zweirads 12b geschwenkt. Ein Lenker und ein Sattel des Zweirads 12b senken sich somit ab. Die Bodenwandung 14b wird zumindest soweit abgesenkt, dass die Deckenwandungen 34b, 78b heruntergeklappt werden können, ohne mit dem Zweirad 12b zu kollidieren. Nach dem Herunterklappen der Deckenwandungen 34b, 78b ist eine Liegefläche hergestellt. Auf der Liegefläche sind nicht näher gezeigte Matratzen angeordnet. Zum Wiederherstellen der Fahrkonfiguration werden die Deckenwandungen 34b, 78b hochgeklappt und die Bodenwandung 14b maximal angehoben.

## Patentansprüche

1. Reisefahrzeug, insbesondere Reisemobil, mit zumindest einem Stauraum (10a), der zu einer Aufnahme wenigstens eines Zweirads (12a) vorgesehen ist, wobei der Stauraum (10a) innerhalb einer Garage (38a) angeordnet ist, mit zumindest einer Bodenwandung (14a), die einen Boden des zumindest einen Stauraums (10a) ausbildet, mit einem Wohnbereich (40a) der an die Garage angrenzt, und mit zumindest einer Deckenwandung (34a, 52a), die eine Decke des zumindest einen Stauraums (10a) ausbildet, wobei die zumindest eine Deckenwandung (34a, 52a) einen Boden für ein Bett (74a) ausbildet,
**gekennzeichnet durch**
zumindest eine Reifenaufnahme (16a), die zu einer Aufnahme zumindest eines Reifens (18a) des wenigstens einen Zweirads (12a) vorgesehen ist, wobei die zumindest eine Reifenaufnahme (16a) eine partielle Vertiefung (20a) in der zumindest einen Bodenwandung (14a) ausbildet, wobei die Reifenaufnahme (16a) eine Reifenauflagefläche (68a) aufweist, die unterhalb einer Hauptbodenfläche (28a) der Bodenwandung (14a) angeordnet ist, und wobei die Hauptbodenfläche (28a) eine größtmögliche ebene Fläche der Bodenwandung (14a) ausbildet, wobei die zumindest eine Reifenaufnahme (16a) eine Hauptlängserstreckung (22a) aufweist, die parallel zu einer Fahrzeuglängsrichtung (24a) ausgerichtet ist.

2. Reisefahrzeug nach Anspruch 1,
**dadurch gekennzeichnet, dass**
die zumindest eine Reifenaufnahme (16a) zumindest teilweise in einem Bereich einer Fahrzeugseitenwand (26a) angeordnet ist.

3. Reisefahrzeug nach einem der vorhergehenden Ansprüche,
**dadurch gekennzeichnet, dass**
die partielle Vertiefung (20a) wenigstens 5 cm unter eine Hauptbodenfläche (28a) der zumindest einen Bodenwandung (14a) reicht.

4. Reisefahrzeug nach einem der vorhergehenden Ansprüche,
**dadurch gekennzeichnet, dass**
eine Oberkante (30a) der zumindest einen Reifenaufnahme (16a) zumindest im Wesentlichen bündig mit der zumindest einen Bodenwandung (14a) abschließt.

5. Reisefahrzeug nach einem der vorhergehenden Ansprüche,
**dadurch gekennzeichnet, dass**
eine Breite (32a) der zumindest einen Reifenaufnahme (16a) im Wesentlichen einer Breite des aufzunehmenden Reifens (18a) entspricht.

6. Reisefahrzeug nach einem der vorhergehenden Ansprüche,
**dadurch gekennzeichnet, dass**
die zumindest eine Deckenwandung (34a; 34b, 78b) dazu vorgesehen ist, aus einer Ausgangslage zumindest bereichsweise relativ zur zumindest einen Bodenwandung (14a; 14b) bewegt zu werden.

7. Reisefahrzeug nach Anspruch 6,
**gekennzeichnet durch**
eine Scharniereinheit (36a; 36b), die dazu vorgesehen ist, die zumindest eine Deckenwandung (34a; 34b, 78b) relativ zur zumindest einen Bodenwandung (14a; 14b) schwenkbar zu lagern.

8. Reisefahrzeug nach Anspruch 7,
**dadurch gekennzeichnet, dass**
die Scharniereinheit (36a; 36b) dazu vorgesehen ist, die zumindest eine Deckenwandung (34a; 34b, 78b) um eine Schwenkachse zu lagern, die sich zumindest im Wesentlichen parallel zur Fahrzeuglängsrichtung (24a; 24b) erstreckt.

9. Reisefahrzeug zumindest nach Anspruch 6,
**gekennzeichnet durch**
eine weitere Deckenwandung (78b), die eine Decke (80b) des zumindest einen Stauraums (10b) und einen Boden (82b) für ein Bett (74b) ausbildet und die dazu vorgesehen ist, aus einer Ausgangslage zumindest bereichsweise relativ zur zumindest einen Bodenwandung (14b) und zur Deckenwandung (34b) bewegt zu werden.

10. Verfahren zur Verstauung wenigstens eines Zweirads (12a) in einem Stauraum (10a) eines Reisefahrzeugs zumindest nach Anspruch 1,
**dadurch gekennzeichnet, dass**
zumindest ein Reifen (18a) des wenigstens einen Zweirads (12a) in die zumindest eine Reifenaufnahme (16a) bewegt wird, die eine partielle Vertiefung (20a) zumindest einer Bodenwandung (14a) ausbildet.

11. Verfahren nach Anspruch 10,
**dadurch gekennzeichnet, dass**
zu einer Verstauung des wenigstens einen Zweirads (12a) zumindest eine Deckenwandung (34a) relativ zur zumindest einen Bodenwandung (14a) zumindest bereichsweise wegbewegt, insbesondere weggeschwenkt, wird.

## Claims

1. Traveling vehicle, in particular mobile home,
with at least one stowage space (10a) which is configured for an accommodation of at least one two-wheeled vehicle (12a), wherein the stowage space (10a) is arranged within a garage (38a),
with at least one bottom wall (14a) that forms a floor of the at least one stowage space (10a),
with a living space (40a) bordering on the garage (38a) and
with at least one ceiling wall (34a, 52a) that forms a ceiling of the at least one stowage space (10a), wherein the at least one ceiling wall (34a, 52a) forms a bottom for a bed (74a),
**characterised by** at least one tire accommodation (16a), which is configured for an accommodation of at least one tire (18a) of the at least one two-wheeled vehicle (12a), wherein the at least one tire accommodation (16a) forms a partial deepening (20a) in the at least one bottom wall (14a),
wherein the tire accommodation (16a) comprises a tire support surface (68a) that is arranged below a main bottom surface (28a) of the bottom wall (14a),
and wherein the main bottom surface (28a) forms a planar surface of the bottom wall (14a) that is as large as possible,
wherein the at least one tire accommodation (16a) has a main longitudinal extension (22a) that is oriented parallel to a longitudinal vehicle direction (24a).

2. Traveling vehicle according to claim 1,
**characterised in that** the at least one tire accommodation (16a) is arranged at least partly in a region of a vehicle side wall (26a).

3. Traveling vehicle according to one of the preceding claims,
**characterised in that** the partial deepening (20a) extends by at least 5 cm below a main bottom surface (28a) of the at least one bottom wall (14a).

4. Traveling vehicle according to one of the preceding claims,
**characterised in that** an upper edge (30a) of the at least one tire accommodation (16a) ends at least substantially flush with the at least one bottom wall (14a).

5. Traveling vehicle according to one of the preceding claims,
**characterised in that** a width (32a) of the at least one tire accommodation (16a) is at least substantially equivalent to a width of the tire (18a) that is to be accommodated.

6. Traveling vehicle according to one of the preceding claims,
**characterised in that** the at least one ceiling wall (34a; 34b, 78b) is configured to be moved out of an initial position, relative to the at least one bottom wall (14a; 14b), at least section-wise.

7. Traveling vehicle according to claim 6,
**characterised by** a hinge unit (36a; 36b), which is configured to support the at least one ceiling wall (34a; 34b, 78b) at least section-wise such that it is pivotable relative to the at least one bottom wall (14a; 14b).

8. Traveling vehicle according to claim 7,
**characterised in that** the hinge unit (36a; 36b) is configured to support the at least one ceiling wall (34a; 34b, 78b) around a pivot axis that extends at least substantially parallel to the longitudinal vehicle direction (24a; 24b).

9. Traveling vehicle according to claim 6,
**characterised by** a further ceiling wall (78b), which forms a ceiling (80b) of the at least one stowage space (10b) and a bottom (82b) for a bed (74b) and which is configured to be moved out of an initial position, relative to the at least one bottom wall (14b) and to the ceiling wall (34b), at least section-wise.

10. Method for the stowage of at least one two-wheeled vehicle (12a) in a stowage space (10a) of a traveling vehicle at least according to claim 1,
**characterised in that** at least one tire (18a) of the at least one two-wheeled vehicle (12a) is moved into the at least one tire accommodation (16a) which forms a partial deepening (20a) of at least one bottom wall (14a).

11. Method according to claim 10
**characterised in that,** for a stowage of the at least one two-wheeled vehicle (12a), at least one ceiling wall (34a) is moved away, in particular pivoted away, relative to the at least one bottom wall (14a) at least section-wise.

## Revendications

1. Véhicule de tourisme, en particulier camping-car,
avec au moins un espace de rangement (10a) prévu pour recevoir au moins un cycle à deux-roues (12a), l'espace de rangement (10a) étant disposé dans un garage (38a),
avec au moins une paroi de fond (14a) implémentant un fond de l'au moins un espace de rangement (10a),
avec une région d'habitation (40a) bordant le garage (38a) et
avec au moins une paroi de plafond (34a, 52a) implémentant un plafond de l'au moins un espace de rangement (10a),
l'au moins une paroi de plafond (34a, 52a) implémentant un fond pour un lit (74a), **caractérisé par** au moins un logement de pneu (16a) prévu pour recevoir au moins un pneu (18a) de l'au moins un cycle à deux-roues (12a),
l'au moins un logement de pneu (16a) formant un renfoncement partiel (20a) dans l'au moins une paroi de fond (14a),
le logement de pneu (16a) comprenant une surface-support de pneu (68a) disposée au-dessous d'une surface de fond principale (28a) de la paroi de fond (14a), et la surface de fond principale (28a) formant une surface planaire de la paroi de fond (14a) qui est la plus grande possible,
l'au moins un logement de pneu (16a) comportant une étendue longitudinale principale (22a) orientée en parallèle à une direction longitudinale du véhicule (24a).

2. Véhicule de tourisme selon la revendication 1,
**caractérisé en ce que** l'au moins un logement de pneu (16a) est disposé au moins partiellement dans une région d'une paroi latérale du véhicule (26a).

3. Véhicule de tourisme selon l'une des revendications précédentes,
**caractérisé en ce que** le renfoncement partiel (20a) s'étend par au moins 5 cm au-dessous d'une surface de fond principale (28a) de l'au moins une paroi de fond (14a).

4. Véhicule de tourisme selon l'une des revendications précédentes,
**caractérisé en ce qu'**un bord supérieur (30a) de l'au moins un logement de pneu (16a) termine au moins sensiblement affleurant avec l'au moins une paroi de fond (14a).

5. Véhicule de tourisme selon l'une des revendications précédentes,
**caractérisé en ce qu'**une largeur (32a) de l'au moins un logement de pneu (16a) est au moins sensiblement équivalente à une largeur du pneu (18a) qui est à accueillir.

6. Véhicule de tourisme selon l'une des revendications précédentes,
**caractérisé en ce que** l'au moins une paroi de plafond (34a ; 34b, 78b) est prévue à être mue d'une position initiale, par rapport à l'au moins une paroi de fond (14a ; 14b), au moins par endroits.

7. Véhicule de tourisme selon la revendication 6,
**caractérisé par** une unité charnière (36a ; 36b) prévue pour supporter l'au moins une paroi de plafond (34a ; 34b ; 78b) à être pivotable par rapport à l'au moins une paroi de fond (14a ; 14b).

8. Véhicule de tourisme selon la revendication 7,
**caractérisé en ce que** l'unité charnière (36a ; 36b) est prévue pour supporter l'au moins une paroi de plafond (34a ; 34b, 78b) autour d'un axe de pivotement (60a) qui s'étend au moins sensiblement en parallèle à la direction longitudinale du véhicule (24a ; 24b).

9. Véhicule de tourisme selon la revendication 6,
**caractérisé par** une autre paroi de plafond (78b), qui forme un plafond (80b) de l'au moins un espace de rangement (10b) et un fond (82b) pour un lit (74b), et qui est prévue à être mue d'une position initiale, par rapport à l'au moins une paroi de fond (14b) et à la paroi de plafond (34b), au moins par endroits.

10. Procédé de rangement d'au moins un cycle à deux-roues (12a) dans un espace de rangement (10a) d'un véhicule de tourisme au moins selon la revendication 1,
**caractérisé en ce qu'au** moins un pneu (18a) de l'au moins un cycle à deux-roues (12a) est mué dans l'au moins un logement de pneu (16a) qui forme un renfoncement partiel (20a) d'au moins une paroi de fond (14a).

11. Procédé selon la revendication 10,
**caractérisé en ce que** pour un rangement de l'au moins un cycle à deux-roues (12a) au moins une paroi de plafond (34a) est au moins par endroits éloignée, en particulier éloignée par pivotement, par rapport à l'au moins une paroi de fond (14a).
